# EUROPEAN PATENT SPECIFICATION

(11) **EP 1 796 398 B1**
(45) Date of publication and mention of the grant of the patent: **18.03.2009**
(21) Application number: 06125549.3
(22) Date of filing: 07.12.2006
(51) Int. Cl.: H04N 7/64

(54) **Method for coding, method for decoding, device for coding and device for decoding video data**
Methode für Kodierung, Methode für Decodierung, Vorrichtung für Kodierung und Vorrichtung für Decodierung von Videodaten
Procédé de codage, procédé de décodage, dispositif de codage et dispositif de décodage de données vidéo

(30) Priority: 12.12.2005 FR 0553825
(43) Date of publication of application: 13.06.2007
(73) Proprietor: Thomson Licensing, 92100 Boulogne-Billancourt (FR)
(72) Inventor: Garnier, Bruno, 92648 Boulogne Cedex (FR); Pasquier, Frédéric, 92648 Boulogne Cedex (FR); Fabre, Sylvain, 92648 Boulogne Cedex (FR)
(74) Representative: Le Dantec, Claude

(56) References cited:
- GOMILA C ET AL: "New features and applications of the H.264 video coding standard" INFORMATION TECHNOLOGY: RESEARCH AND EDUCATION, 2003. PROCEEDINGS. ITRE2003. INTERNATIONAL CONFERENCE ON AUG. 11-13, 2003, PISCATAWAY, NJ, USA,IEEE, 11 August 2003 (2003-08-11), pages 6-10, XP010684962 ISBN: 0-7803-7724-9

## Description

### FIELD OF THE INVENTION

The invention relates to a device and a method for coding and for decoding video data.

### BACKGROUND OF THE INVENTION

The development of compression standards has today led to the complexity of the coding algorithms.

It is now becoming important to be able to test the coding equipment, particularly when it has to comply with coding standards.

Particularly, in the context of the H.264 compression standard, the compression algorithms used are extremely complex. When the compression algorithms are generated by integrated circuits, it becomes difficult to understand at what level of the coding an error may occur, when a problem is detected in the decoder during the decoding phase. The coding of pictures being, for most of the pictures, dependent on the coding of other pictures, it is also difficult to determine in which picture the problem appears.

During the coding, it therefore becomes important to find mechanisms making it possible to mark, with the aid of additional information, the method of decoding in order to reveal at what level of coding or of decoding the problem occurred.

The detection of coding problems is desirable for the validation of the integrated circuits and also for the remote detection of problems at a client level.

### SUMMARY OF THE INVENTION

The invention proposes to solve at least one of the aforementioned problems. Accordingly, the invention is defined by the claims.

### BRIEF DECSCRIPTION OF THE DRAWINGS

The invention will be better understood and illustrated by means for exemplary embodiments and advantageous applications, in no way limiting, with reference to the appended figures in which:
- Figure 1 represents a structure of the coded stream according to a preferred embodiment of the invention,
- Figure 2 represents a coding device according to a preferred embodiment of the invention,
- Figure 3 represents a decoding device according to a preferred embodiment of the invention.

### DETAILED DESCRIPTION OF PREFERED EMBODIMENTS

The modules represented in the various figures are functional units that may or may not correspond to physically distinguishable units. For example, these modules or some of them may be combined in a single component, or constitute functionalities of one and the same software program. On the other hand, certain modules may, where necessary, consist of separate physical entities.

The description below is based on a data coding complying with the H.264 standard. This exemplary embodiment is not limited to a coding of this type. The invention in effect relates to any type of coding in which the information is inserted into the stream in order to make it easier to use subsequently.

"Data group" may be understood to be any breakdown into a data set. It may in particular be understood to be a group of pictures (GOP); it is also possible to understand slices of pictures.

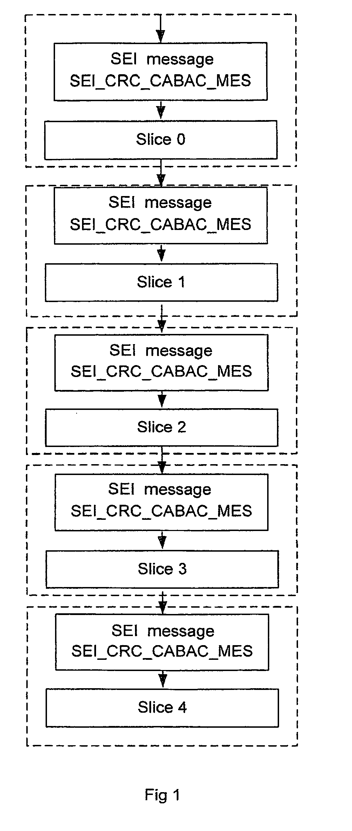

Figure 1 shows the structure of the stream coded according to a preferred embodiment of the invention.

The pictures are coded in a broken down manner. Each picture is broken down into sections better known as slices. The breakdown into slices is decided during the coding. This breakdown into slices is carried out by the users of the coding device and particularly by the broadcasters of programmes.

According to this embodiment, an SEI message is inserted before each picture slice. The SEI message being indicated in Figure 1 by SEI_CRC_CABAC_MES.

This SEI message comprises information relating to the coding and makes it possible, during the decoding of the slice to which it refers, to verify that the decoding is correct and, if this decoding is not correct, to be able to detect it to analyse it. When an error is detected, it is possible, for example, to replace the portion of the picture that is incorrect with the previously decoded picture.

For this purpose, the SEI message contains information relating to the coding of the entropic type carried out by the coding device. The nature of this information is specified later.

In the data stream, the SEI message may refer either to the preceding slice or to the next slice, depending on the implementation carried out in the coder. In the preferred embodiment, it refers to the slice that follows in the stream, the slice being stored before being transmitted.

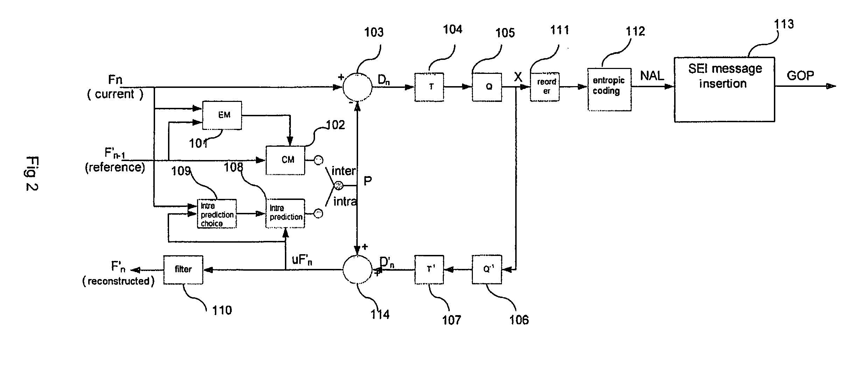

Figure 2 represents a coding device according to the preferred embodiment of the invention.

A current frame Fₙ is presented at the input of the coder to be coded therein. This frame is coded in the form of slices, that is to say that it is broken down into sub-units which each contain a certain number of macroblocks corresponding to groups of 16*16 pixels. Each macroblock is coded in intra mode or inter mode. Whether it is in intra mode or in inter mode, a macroblock is coded by being based on a reconstructed frame. A module 109 decides on the coding mode, in intra mode, of the current picture, according to the content of the picture. In intra mode, P (represented in Figure 2) consists of samples of the current frame Fn that have previously been coded, decoded and reconstructed (uF'n in Figure 2, u meaning unfiltered). In inter mode, P is made up of an estimate of movement based on one or more frames F'ₙ₋₁.

An estimate movement module 101 establishes an estimate of movement between the current frame Fn and at least one previous frame F'n-1. Based on this estimate of movement, a movement compensation module 102 produces a frame P when the current picture Fn must be coded in inter mode.

A subtractor 103 produces a signal Dn, the difference between the picture Fn to be coded and the picture P. Then this picture is transformed by a DCT transformation in a module 104. The transformed picture is then quantized by a quantization module 105. Next, the pictures are reorganized by a module 111. An entropic coding module 112 of the CABAC (Context-based Adaptive Binary Arithmetic Coding) type then codes each picture.

Inverse transformation and quantization modules 106 and 107 respectively make it possible to reconstitute a difference D'n after transformation and quantization then inverse quantization and inverse transformation.
When the picture is coded in intra mode, according to the module 109, an intra prediction module 108 codes the picture. A picture uF'n is obtained at the output of an adder 114, as the sum of the signal D'n and of the signal P. This module 108 also receives at the input the unfiltered reconstructed picture F'n.
A filtering module 110 makes it possible to obtain the reconstructed filtered picture F'n from the picture uF'n.

The entropic encoding module 112 transmits the coded slices encapsulated in units of the NAL type. The NALs contain, in addition to the slices, information relating to the headers for example. The NAL type units are transmitted to a module 113. The module 113 inserts an SEI message before the transmission of the various coded picture slices to a transmission network.
An SEI message is inserted in order to obtain a stream as indicated in Figure 1.
This message also comprises information relating to the entropic coding performed by the module 112.
The entropic coding module 112 uses a coding algorithm of the "cabac" type. The "codlLow" and "codelRange" parameters are parameters defined in the H.264 standard. These parameters are computed by the entropic coding module 112 for each slice. The SEI message therefore includes the values "codILow" and "codelRange" relative to the coding of each slice.

The table below illustrates the payload portion of an SEI message, using a type 6 payload, corresponding, in the H.264 standard, to a payload of the "user_data_unregistered" type, represented in the table below.

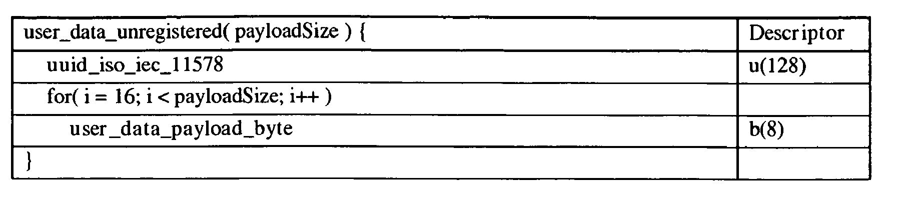

- the 128-bit word "uuid_iso_iec_11578" indicates to the decoder the message type during the decoding phase. The H.264 standard specifies a certain number of values for this word according to its meaning. One of these values indicates that it is a message of the "user_data_payload" type.
- the word "user_data_payload_byte" is an 8-bit word comprising a portion of the SEI message. These 8 bits are used to code the data relating to proprietary applications and particularly here for coding the data relating to the invention as coded below.
   It is therefore possible to code, in this series of bytes, the values of codIRange and codlLow.
   The values of CodIRange and CodILow are each coded on 9 bits.

In addition to these data relating to the entropic coding, the SEI message contains an item of information of the error correcting code type (CRC for cycle redundancy check). This error correcting code is computed from the uncoded data. This error correcting code is computed using methods known to those skilled in the art and in particular using generating polynomials.
Advantageously, a CRC is inserted for each slice. The value of CRC is then coded with the values of CodILow and CodlRange.

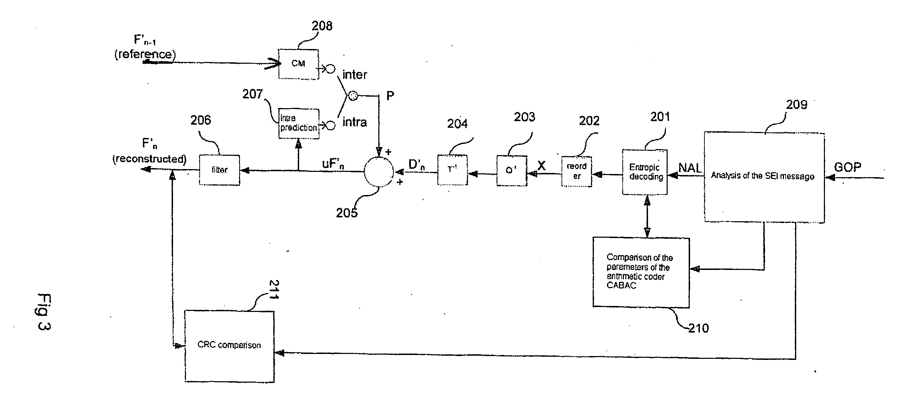

Figure 3 represents a decoding device according to the invention.

A module 209 receives the SEI messages at the input. It extracts the various SEI messages and transmits them to a module 210 for comparison of the values relative to the entropic decoding and to a module 211 for CRC comparison of the values relating to the CRC. The payload data NALs are transmitted to an entropic decoding module 201.

The module 210 stores the incoming SEI message and compares the values of the CodelRange and CodelLow of the received slice with the values obtained during the arithmetic decoding carried out by the entropic decoding module 201. The entropic decoding module 201 carries out the inverse operation of the module 112 of Figure 2. If the values CodelRange and CodelLow of the received slice are different from the values obtained during the decoding, then an error has occurred. This error is generated in the CABAC decoding if it is certain that the transport layer is reliable, or in the CABAC coding. In the test case, it is possible in particular to check that the transport layer is reliable. This therefore makes it possible advantageously to verify either a coder, or a decoder when it is known that the decoder, respectively the coder, is reliable.

The entropic decoding module then attempts to reconstruct the errored slice thanks to the values of CodelLow and CodelRange received and stored in the module 210.

During the entropic decoding, the arithmetic decoder values CodILow and CodIRange are transmitted to the comparison module 210.

Then, the data are transmitted to a reordering module 202 in order to obtain a set of coefficients. These coefficients then undergo an inverse quantization in the module 203 and an inverse DCT transformation in the module 204 at the output of which the macroblocks D'n are obtained, D'n being a deformed version of Dn. A predictive block P is added to D'n by an adder 205 to reconstruct a macroblock uF'n. The block P is obtained after compensation of movement, carried out by a module 208, of the preceding decoded frame, during a coding in inter mode or after intra prediction of the macroblock uF'n, by a module 207, in the case of a coding in intra mode. A filter 206 is applied to the signal uF'n to reduce the distortion effects and the reconstructed frame F'n is created from a series of macroblocks.

A module 211 receives at the input a cyclic redundancy code (CRC) value extracted from the received SEI message and relating to the current slice. The CRC relates to the uncoded slice. The module 211 therefore computes the CRC relating to the slice that has just been decoded and compares this computed value with the value received from the module 209. If this comparison shows a difference between the two values, then it is known that there is an error during the decoding, if the transport layer is reliable.

According to another embodiment, the inserted SEI message comprises the codelRange and CodelLow values of the CABAC arithmetic module for each macroblock of the slice and not merely for each slice as in the preferred embodiment. CodIRange and CodILow are each coded on 9 bits, so 14 bits remain for coding, on 32 bits, the block number. In HD (high definition) format, 8160 macroblocks are used per picture.

This then gives, for example, the following message as the SEI message.

| MB number | CodIRange (9 bits), value after eos decoding | CodILow (9 bits), value after eos decoding |
|---|---|---|
| 0 | Cir=0x1e0 | Cio=0x10e |
| 1 | Cir=0x180 | Cio=0x0be |
| 2 | Cir=0x1b0 | Cio=0x022 |
| 3 | Cir=0x1c0 | Cio=0x006 |

Advantageously, in the case of incorrect decoding, this makes it possible to define the macroblock that is errored and to recover it. Such granularity is therefore particularly effective but requires the CodelRange and CodelLow values for each macroblock of one and the same slice to be stored before they are sent simultaneously in the same SEI message.

In other embodiments, it is of course possible to insert one CRC per GOP or per picture but the granularity is less fine and the detection of errors is therefore made more difficult.

When one CRC is inserted per picture, it is for example inserted into the SEI message relating to the last slice of the picture.

When one CRC is inserted per group of pictures (GOP), it is for example inserted into the SEI message relating to the last slice of the last coded picture of the GOP.

## Claims

1. Video data coding device comprising means for coding, the pictures in data groups according to the H.264 video coding standard, **characterized in that** it comprises means (113) for inserting, into the coded data groups, a Supplemental Enhancement Information (SEI) message (SEI_CRC_CABAC_MES) as defined in the H264 video coding standard comprising CodlRange and CodlLow parameters originating from the coding of the said group, said parameters being related to the entropic coding of the data, and allowing, during a subsequent decoding, a reconstruction of the said data in the event of error during the coding or during the decoding by comparing the parameters contained in the Supplemental Enhancement Information (SEI) message with their values obtained during said decoding.

2. Device according to claim 1, **characterized in that**
- the means for coding the pictures in data groups code each picture in a slice,
- the means (113) for inserting the said SEI message (SEI_CRC_CABAC_MES) into the coded data groups insert a SEI messagerelating to each slice before each slice.

3. Device according to claim 2, **characterized in that**
- the means for coding the pictures in data groups code each slice in pixel macroblocks,
- the CodlRange and CodlLow coding parameters relating to each slice comprise CodlRange and CodlLow parameters relating to each macroblock.

4. Device according to one of the preceding claims, **characterized in that** the said SEI message (SEI_CRC_CABAC_MES) comprises an error correcting message (CRC) computed on the uncoded data.

5. Device according to claim 4, **characterized in that** the means (113) for inserting the said SEI message (SEI_CRC_CABAC_MES) into the coded data groups insert a SEI message (SEI_CRC_CABAC_MES) relating to each slice before each slice and the said error correcting message (CRC) for each picture.

6. Video data decoding device comprising means for decoding data in groups, said data being encoded according to H264 video coding standard, each data group comprising at least one Supplemental Enhancement Information (SEI) message comprising CodlRange and CodILow parameters originating from the coding of the said group and related to the entropic coding of the data, **characterized in that** it comprises
- means for extracting the said SEI message (SEI_CRC_CABAC_MES),
- means for comparing the parameters contained in said (SEI) message with their values obtained during said decoding,
- means for detecting an error during the decoding or during the coding according to the said comparison.

7. Video data coding method comprising a step for coding the pictures in data groups according to the H264 video coding standard, **characterized in that** it comprises a step for inserting, into the coded data groups, a Supplemental Enhancement Information (SEI) message (SEI_CRC_CABAC_MES) as defined in the H264 video coding standard comprising CodIRange and CodlLow parameters originating from the coding of the said group said parameters being related to the entropic coding of the data and allowing, during a subsequent decoding, a reconstruction of the said data in the event of error during the coding or during the decoding by comparing the parameters contained in the Supplemental Enhancement Information (SEI) messages with their values obtained during said decoding

8. Video data decoding method comprising a step for decoding the data in groups, said data being encoded according to H264 video coding standard, each data group comprising at least one Supplemental Enhancement Information (SEI) message (SEI_CRC_CABAC_MES) comprising CodIRange and CodILow parameters originating from the coding of the said group and related to the entropic coding of the data, **characterized in that** it comprises
- a step for extracting the said message (SEI_CRC_CABAC_MES),
- a step for comparing the parameters contained in the Supplemental Enhancement Information (SEI) messages with their values obtained during said decoding,
- a step for detecting error during the decoding or during the coding according to the said comparison.

## Patentansprüche

1. Videodaten-Codierungsvorrichtung, die Mittel zum Codieren der Bilder in Datengruppen gemäß der Videocodierungsnorm H.264 umfasst, **dadurch gekennzeichnet, dass** sie Mittel (113) umfasst, um in die codierten Datengruppen eine wie in der Videocodierungsnorm H264 definierte Supplemental-Enhancement-Information-Nachricht (SEI-Nachricht) (SEI_CRC_CABAC_MES) einzufügen, die Parameter CodlRange und CodlLow umfasst, die aus der Codierung der Gruppe resultieren, wobei sich die Parameter auf die entropische Codierung der Daten beziehen und während einer nachfolgenden Decodierung im Fall eines Fehlers während der Codierung oder während der Decodierung durch Vergleichen der in der Supplemental-Enhancement-Information-Nachricht (SEI-Nachricht) enthaltenen Parameter mit ihren während der Decodierung erhaltenen Werten eine Rekonstruktion der Daten zulassen.

2. Vorrichtung nach Anspruch 1, **dadurch gekennzeichnet, dass**
- die Mittel zum Codieren der Bilder in Datengruppen jedes Bild in einem Schnitt codieren,
- die Mittel (113) zum Einfügen der SEI-Nachricht (SEI_-CRC_CABAC_MES) in die codierten Datengruppen vor jedem Schnitt eine SEI-Nachricht einfügen, die sich auf jeden Schnitt bezieht.

3. Vorrichtung nach Anspruch 2, **dadurch gekennzeichnet, dass**
- die Mittel zum Codieren der Bilder in Datengruppen jeden Schnitt in Pixelmakroblöcke codieren,
- die Codierungsparameter CodlRange und CodlLow, die sich auf jeden Schnitt beziehen, Parameter CodlRange und CodlLow umfassen, die sich auf jeden Makroblock beziehen.

4. Vorrichtung nach einem vorherigen Anspruch, **dadurch gekennzeichnet, dass** die SEI-Nachricht (SEI_CRC_CABAC_MES) eine Fehlerkorrekturnachricht (CRC) umfasst, die an den uncodierten Daten berechnet wird.

5. Vorrichtung nach Anspruch 4, **dadurch gekennzeichnet, dass** die Mittel (113) zum Einfügen der SEI-Nachricht (SEI_CRC_CABAC_MES) in die codierten Datengruppen vor jedem Schnitt und vor der Fehlerkorrekturnachricht (CRC) für jedes Bild eine SEI-Nachricht (SEI_CRC_CABAC_MES) einfügen, die sich auf jeden Schnitt bezieht.

6. Videodaten-Decodierungsvorrichtung, die Mittel zum Decodieren von Daten in Gruppen umfasst, wobei die Daten gemäß der Videocodierungsnorm H264 codiert sind, wobei jede Datengruppe mindestens eine Supplemental-Enhancement-Information-Nachricht (SEI-Nachricht) umfasst, die Parameter CodlRange und CodlLow umfasst, die aus der Codierung der Gruppe resultieren und sich auf die entropische Codierung der Daten beziehen, **dadurch gekennzeichnet, dass** die Videodaten-Decodierungsvorrichtung umfasst:
- Mittel zum Extrahieren der SEI-Nachricht (SEI_-CRC_CABAC_MES),
- Mittel zum Vergleichen der in der Supplemental-Enhancement-Information-Nachricht (SEI-Nachricht) enthaltenen Parameter mit ihren während der Decodierung erhaltenen Werten,
- Mittel zum Erfassen eines Fehlers während der Decodierung oder während der Codierung gemäß dem Vergleich.

7. Videodaten-Codierungsverfahren, das einen Schritt zum Codieren der Bilder in Datengruppen gemäß der Videocodierungsnorm H264 umfasst, **dadurch gekennzeichnet, dass** es einen Schritt umfasst, um in die codierten Datengruppen eine wie in der Videocodierungsnorm H264 definierte Supplemental-Enhancement-Information-Nachricht (SEI-Nachricht) (SEI_CRC_CABAC_MES) einzufügen, die Parameter CodlRange und CodlLow umfasst, die aus der Codierung der Gruppe resultieren, wobei sich die Parameter auf die entropische Codierung der Daten beziehen und während einer nachfolgenden Decodierung im Fall eines Fehlers während der Codierung oder während der Decodierung durch Vergleichen der in den Supplemental-Enhancement-Information-Nachrichten (SEI-Nachrichten) enthaltenen Parameter mit ihren während der Decodierung erhaltenen Werten eine Rekonstruktion der Daten zulassen.

8. Videodaten-Decodierungsverfahren, das einen Schritt zum Decodieren der Daten in Gruppen umfasst, wobei die Daten gemäß der Videocodierungsnorm H264 codiert sind, wobei jede Datengruppe mindestens eine Supplemental-Enhancement-Information-Nachricht (SEI-Nachricht) (SEI_CRC_CABAC_MES) umfasst, die die Parameter CodlRange und CodlLow umfasst, die aus der Codierung der Gruppe resultieren und sich auf die entropische Codierung der Daten beziehen, **dadurch gekennzeichnet, dass** das Videodaten-Decodierungsverfahren umfasst:
- einen Schritt zum Extrahieren der Nachricht (SEI_CRC_CABAC_MES),
- einen Schritt zum Vergleichen der in den Supplemental-Enhancement-Information-Nachrichten (SEI-Nachrichten) enthaltenen Parameter mit ihren während der Decodierung erhaltenen Werten,
- einen Schritt zum Erfassen eines Fehlers während der Decodierung oder während der Codierung gemäß dem Vergleich.

## Revendications

1. Dispositif de codage de données vidéo comprenant des moyens de coder les images en groupes de données conformément au standard de codage vidéo H.264, **caractérisé en ce qu'**il comprend des moyens (113) d'insérer, dans les groupes de données codées, un message SEI (SEI_CRC_CABAC_MES) tel que défini dans le standard H.264 comprenant les paramètres CodlRange et CodILow issus du codage dudit groupe et relatifs au codage entropique desdites données et permettant, lors d'un décodage ultérieur, une reconstruction desdites données en cas d'erreur lors du codage ou lors du décodage en comparant les paramètres contenus dans le message SEI avec leurs valeurs obtenues durant ledit décodage.

2. Dispositif selon la revendication 1 **caractérisé en ce que**
- les moyens de coder les images en groupes de données codent chaque image en tranche (slice),
- les moyens (113) d'insérer dans les groupes de données codées ledit message SEI (SEI_CRC_CABAC_MES) insèrent un message SEI relatif à chaque tranche (slice) avant chaque tranche (slice).

3. Dispositif selon la revendication 2 **caractérisé en ce que**
- les moyens de coder les images en groupes de données codent chaque tranche en macroblocs de pixels,
- les paramètres de codage CodIRange et CodlLow relatifs à chaque tranche comprennent des paramètres CodIRange et CodlLow relatifs à chaque macrobloc.

4. Dispositif selon l'une des revendications précédentes **caractérisé en ce que** ledit message SEI (SEI_CRC_CABAC_MES) comprend un message correcteur d'erreur (CRC) calculé sur les données non codées.

5. Dispositif selon la revendication 4 **caractérisé en ce que** les moyens (113) d'insérer dans les groupes de données codées ledit message SEI (SEI_CRC_CABAC_MES) insèrent un message SEI (SEI_CRC_CABAC_MES) relatif à chaque tranche avant chaque tranche et ledit message correcteur d'erreur (CRC) pour chaque image.

6. Dispositif de décodage de données comprenant des moyens de décoder des données en groupes, lesdites données étant codées selon le standard de codage vidéo H.264, chaque groupe de données comprenant au moins un message SEI comprenant des paramètres CodIRange et CodILow issus du codage dudit groupe et relatifs au codage entropique des données, **caractérisé en ce qu'**il comprend
- des moyens d'extraire ledit message SEI (SEI_CRC_CABAC_MES),
- des moyens de comparer les paramètres contenus dans ledit message SEI (SEI_CRC_CABAC_MES) à leurs valeurs obtenues lors dudit décodage,
- des moyens de détecter une erreur lors du décodage ou lors du codage en fonction de ladite comparaison.

7. Procédé de codage de données vidéo comprenant une étape de codage des images en groupes de données selon le standard de codage vidéo H.264, **caractérisé en ce qu'**il comprend une étape d'insertion, dans les groupes de données codées, d'un message SEI (SEI_CRC_CABAC_MES) tel que défini dans le standard de codage vidéo H.264 comprenant des paramètres CodIRangeb et CodlLow issus du codage dudit groupe , lesdits paramètres étant relatifs au codage entropique des données et permettant lors d'un décodage ultérieur, une reconstruction desdites données en cas d'erreur lors du codage ou lors du décodage en comparant les paramètres contenus dans le message SEI avec leurs valeurs obtenues durant ledit décodage (SEI_CRC_CABAC_MES).

8. Procédé de décodage de données vidéo comprenant une étape de décodage des données en groupes, lesdites données étant codées selon le standard de codage vidéo H.264, chaque groupe de données comprenant au moins un message SEI (SEI_CRC_CABAC_MES) comprenant des paramètres CodIRange et CodlLow issus du codage dudit groupe et relatif au codage entropique des données, **caractérisé en ce qu'**il comprend
- une étape d'extraction dudit message SEI (SEI_CRC_CABAC_MES),
- une étape de comparaison des paramètres contenus dans le message SEI (SEI_CRC_CABAC_MES) avec les valeurs obtenues durant ledit décodage,
- une étape de détection d'erreur lors du décodage ou lors du codage en fonction de ladite comparaison.
